# EUROPÄISCHE PATENTSCHRIFT

(11) **EP 1 118 862 B1**
(45) Veröffentlichungstag und Bekanntmachung des Hinweises auf die Patenterteilung: **02.05.2003**
(21) Anmeldenummer: 01100946.1
(22) Anmeldetag: 17.01.2001
(51) Int. Cl.: G01N 35/10, B01L 11/00

(54) **Analysegerät zur Analyse von Proben**
Device for analysing samples
Appareil d'analyse d'échantillons

(30) Priorität: 21.01.2000 DE 10002475
(43) Veröffentlichungstag der Anmeldung: 25.07.2001
(73) Patentinhaber: Roche Diagnostics GmbH, 68305 Mannheim (DE); F. HOFFMANN-LA ROCHE AG, 4070 Basel (CH)
(72) Erfinder: Fürst, Otto, Dr., 68519 Viernheim (DE); Jansen, Pau., 68169 Mannheim (DE); Jäck, Thomas, 68542 Heddesheim (DE)
(74) Vertreter: Pfeifer, Hans-Peter, Dr.

(56) Entgegenhaltungen:
- EP-A- 0 645 631
- EP-A- 0 825 446
- EP-A- 0 918 221
- DE-A- 19 610 607
- US-A- 5 309 775
- US-A- 5 820 824
- US-A- 6 027 691

## Beschreibung

Die Erfindung betrifft ein Analysegerät zur Analyse von Proben, insbesondere für medizinische Anwendungen. Die Proben sind vorzugsweise Körperflüssigkeiten wie Blut oder Urin. Ziel der Analyse ist es, die Gegenwart bzw. die Konzentration eines Bestandteils (Analyt) der Probe nachzuweisen.

In derartigen Analysegeräten werden die für die Analyse erforderlichen Verfahrensschritte automatisch durchgeführt. Zu diesem Zweck werden Proben und Reagenzbestandteile in Behälter (Reaktionsgefäße) dosiert, gemischt und für vorbestimmte Reaktionszeiten inkubiert. Die Reaktion der Probe mit den Reagenzien führt zu einer für die Analyse charakteristischen meßbaren Änderung, die gemessen und zur Ermittlung des Analyseergebnisses ausgewertet wird. Es sind zahlreiche unterschiedliche Analysegeräte bekannt, die sich sowohl hinsichtlich der Reaktionsprinzipien (z.B. klassische klinische Chemie; Immunchemie; DNA-Analytik) hinsichtlich der für die Analyse charakteristischen Meßgröße (z.B. photometrisch meßbare Farbänderung, Trübungsmessung, elektrochemische Messung) und hinsichtlich der Konstruktion des Gerätes in vielfältiger Weise unterscheiden. Diese unterschiedlichen Verfahrensweisen sind bekannt und nicht Gegenstand der vorliegenden Erfindung.

Gemeinsam ist zahlreichen Analysegeräten, daß sie eine Mehrzahl von (stationären oder beweglichen) Stationen aufweisen, an denen Teilschritte des für die Analyse erforderlichen Verfahrens durchgeführt werden. Die meisten dieser Stationen dienen in irgendeiner Form dem Handling von Flüssigkeiten und werden deshalb allgemein als Liquid-Handling(LH)-Stationen bezeichnet. Typische Beispiele sind Dosierstationen, bei denen mittels dünner Röhrchen (Dosiernadeln) eine Flüssigkeit (Reagenz oder Probe) in ein Reaktionsgefäß dosiert wird oder Mischstationen, an denen beispielsweise mittels eines in ein Reaktionsgefäß eintauchenden Rührers Flüssigkeiten miteinander und/oder mit festen Bestandteilen (beispielsweise suspendierten Kügelchen als Träger für fixierte Immunreagenzien, sogenannte Beads) gemischt werden. Auch Meßstationen sind als LH-Stationen anzusehen, soweit die Messung einen Liquid-Handling-Schritt, wie beispielsweise das Füllen und das Entleeren einer Meßzelle, erfordert.

Zu den LH-Stationen solcher Analysegeräte gehören typischerweise auch eine oder mehrere Waschstationen, an denen ein Bearbeitungswerkzeug, wie beispielsweise eine Dosiernadel oder ein Rührer, gereinigt wird. Eine sorgfältige Reinigung der Werkzeuge, die nacheinander in unterschiedlich zusammengesetzte Flüssigkeiten eingetaucht werden, ist im Hinblick auf die Genauigkeit der Analyse von großer Bedeutung, weil Verunreinigungen zur Übertragung von einer Flüssigkeit in die andere ("Verschleppung") führen. Um eine möglichst gute Reinigung zu bewirken, sind unterschiedliche Konstruktionen von Waschstationen vorgeschlagen worden. Ein Beispiel von Waschstationen, die besonders vorteilhaft im Zusammenhang mit der vorliegenden Erfindung verwendet werden können, ist in der internationalen Patentanmeldung WO 97/35173 beschrieben. An einem Teil der LH-Stationen üblicher Analysegeräte fällt flüssiger Abfall (liquid waste) an, der entsorgt werden muß. Im Falle von Waschstationen besteht der Flüssigabfall vor allem aus der dort verwendeten Waschflüssigkeit mit den abgewaschenen Resten von Reagenzien und/oder Proben. Darüber hinaus kann auch an anderen LH-Stationen Flüssigabfall anfallen, so insbesondere an der Meßstation ein nach Abschluß der Messung nicht mehr benötigtes Reaktionsgemisch. An anderen Bearbeitungsstationen können beispielsweise Dosierüberschüsse anfallen, die an einem Überlauf eines Reaktionsgefäßes abgesaugt werden. Alle LH-Stationen, die Flüssigabfall erzeugen, werden hier zusammenfassend als Flüssigabfallquellen bezeichnet.

Üblicherweise wird der Flüssigabfall dadurch entsorgt, daß er über ein Leitungssystem einem Abfallsammelbehälter zugeführt wird. Bei manchen Analysegeräten ist der Abfallsammelbehälter derart unterhalb der Flüssigabfallquellen angeordnet, daß der Flüssigabfall allein aufgrund der Schwerkraft abfließt. Dies bedingt jedoch eine relativ hohe Bauform des Gerätes sowie Flüssigabfall-Leitungen mit großem Durchmesser und einem ausreichenden Gefälle. Außerdem müssen Waschstationen solcher Geräte so ausgebildet sein, daß die Waschflüssigkeit spontan abfließt. Zur Vermeidung dieser Probleme werden Pumpen eingesetzt, die den Flüssigabfall an den Flüssigabfallquellen absaugen und in den Abfallsammelbehälter transportieren.

In der Regel besteht der an Flüssigabfallquellen von Analysegeräten anfallende Flüssigabfall nicht ausschließlich aus Flüssigkeit, sondern enthält von Fall zu Fall unterschiedliche und während des Funktionsablaufs des Analysegeräts wechselnde Anteile an Luft. Der Begriff "Flüssigabfall" ist demzufolge dahingehend zu verstehen, daß es sich um einen Abfall handelt, der als Flüssigkeit gepumpt werden kann, neben flüssigen Bestandteilen jedoch auch Luft (unter Umständen auch andere Gase) und feinverteilte Feststoffe enthalten kann. Soweit auf den Flüssiganteil des Abfalls Bezug genommen wird, ist damit der durchschnittliche Volumenanteil an Flüssigkeit während des Funktionsablaufs des Geräts in der Leitung gemeint, die von der jeweiligen Flüssigabfallquelle zu dem Abfallbehälter führt.

Der Flüssigabfall von Analysegeräten enthält meist Bestandteile (insbesondere in Waschflüssigkeiten und Reagenzien enthaltene Detergentien), die zur Bildung von Schaum in dem Abfallbehälter führen. Dies ist mit erheblichen Nachteilen verbunden. Der Schaum füllt den Abfallbehälter rasch, so daß er zur Vermeidung von Verunreinigungen vorzeitig ausgewechselt oder entleert werden muß. Außerdem wird durch den Schaum die bei den meisten Geräten vorgesehene Detektion des Flüssigkeits-Höhenstandes in dem Abfallbehälter gestört.

Zur Verminderung der Schaumbildung in dem Abfallbehälter können dem Abfall chemische Substanzen ("Antifoam") zugesetzt werden, die der Schaumbildung entgegenwirken. Dies ist jedoch mit zusätzlichen Handhabungsschritten und/oder speziellen konstruktiven Maßnahmen am Gerät für die Zudosierung der Antifoam-Substanz verbunden. Außerdem verursacht die chemische Schaumbekämpfung zusätzliche Kosten und möglicherweise zusätzliche Probleme bei der umweltgerechten Entsorgung des Flüssigabfalls aus dem Abfallsammelbehälter.

Eine andere Möglichkeit zur Reduzierung der mit der Schaumbildung verbundenen Probleme besteht darin, besonders große Abfallsammelbehälter zu verwenden. Dies steht jedoch im Gegensatz dazu, daß die Analysegeräte möglichst raumsparend konstruiert sein sollten.

Der Erfindung liegt auf dieser Basis die Aufgabe zugrunde, die Schaumbildung im Abfallsammelbehälter von Analysegeräten mit möglichst geringem Aufwand sowohl hinsichtlich der Konstruktion des Gerätes als auch hinsichtlich dessen Handhabung wesentlich zu vermindern.

Die Aufgabe wird gelöst durch ein Analysegerät zur Analyse von Proben, insbesondere von Körperflüssigkeiten, auf darin enthaltene Bestandteile mit einer Mehrzahl von Liquid-Handling(LH)-Stationen, die Bearbeitungsstationen einschließen, an denen mittels Bearbeitungswerkzeugen, wie beispielsweise einer Dosiernadel oder einem Rührer, Bearbeitungsschritte an in Behältern enthaltenen Flüssigkeiten durchgeführt werden, bei welchem an mindestens einem Teil der LH-Stationen flüssiger Abfall anfällt, so daß sie Flüssigabfallquellen bilden und der flüssige Abfall mittels mindestens einer Pumpe von den Flüssigabfallquellen mit unterschiedlichen Anteilen an Luft über ein Flüssigabfall-Leitungssystem in einen Abfallbehälter abgesaugt wird, das Flüssigabfall-Leitungssystem mindestens zwei getrennt in den Abfallbehälter mündende Leitungen aufweist, und an mindestens eine der getrennt in den Abfallbehälter mündenden Leitungen eine Mehrzahl von Flüssigabfallquellen angeschlossen sind, von denen jeweils separate Leitungen als Nebenstränge zu einer Leitungszusammenführung führen, von der aus eine gemeinsame Leitung als Hauptstrang zu dem Abfallbehälter führt und in diesen mündet, wobei die Nebenstränge derartig zusammengeführt sind, daß in einer der mindestens zwei in den Abfallbehälter mündenden Leitungen Flüssigabfall mit einem höheren Luftanteil und in einer zweiten der mindestens zwei in den Abfallbehälter mündenden Leitungen Flüssigabfall mit einem niedrigeren Luftanteil transportiert wird.

Analysegeräte mit Leitungssystemen, bei denen eine Mehrzahl getrennter Flüssigabfall-Leitungen bis in den Abfallbehälter geführt wird, sind in verschiedenen Ausgestaltungen, beispielsweise aus der US 5,820,824, der EP 0825446 A2 und der EP 0918221 A2, bekannt.

Im Rahmen der Erfindung wurde festgestellt, daß die Schaumbildung wesentlich reduziert wird, wenn man den Flüssigabfallstrom der verschiedenen Flüssigabfallquellen in Abhängigkeit von dem jeweils in den Leitungen des Flüssigabfall-Leitungssystem transportierten durchschnittlichen Anteil an Luft derartig zusammenfaßt, daß mindestens zwei in getrennten Leitungen strömende Teilströme entstehen, die vollständig getrennt bis zu dem Abfallsammelbehälter gepumpt werden und in diesen münden, wobei einer der Teilströme einen relativ hohen Luftanteil und der andere Teilstrom einen relativ niedrigen Luftanteil enthält.

Die Flüssigabfallquellen werden gruppenweise derartig zusammengefaßt, daß an mindestens eine der getrennt in den Abfallbehälter mündenden Leitungen mehrere Flüssigabfallquellen angeschlossen sind. Zu diesem Zweck sind separate Leitungsabschnitte ("Nebenstränge") vorhanden, die von den Flüssigabfallquellen einer Gruppe zu mindestens einer Leitungszusammenführung führen. Nach der Zusammenführung aller Teilströme einer Gruppe strömt der resultierende flüssige Abfall in einem gemeinsamen Leitungsabschnitt ("Hauptstrang" der Gruppe) zu dem Abfallbehälter. Je nach Anzahl der Flüssigabfallquellen sind dabei unterschiedliche Kombinationen möglich.

Die Gruppen der Flüssigabfallquellen, deren Abfälle zusammengefaßt und gemeinsam zu dem Abfallbehälter transportiert werden, sind so aufgeteilt, daß die resultierenden Flüssiganteile der beiden in den Abfallbehälter mündenden Leitungen sich deutlich (vorzugsweise mindestens um einen Faktor 1,5) unterscheiden. Bevorzugt gehören einer ersten Gruppe nur Flüssigabfallquellen mit einem relativ hohen Luftanteil und einer zweiten Gruppe nur Flüssigkeitsabfallquellen mit einem relativ niedrigen Luftanteil an. "Relativ hoch" und "relativ niedrig" ist dabei in dem Sinn zu verstehen, daß in der Gruppe mit dem höheren Luftanteil keine Flüssigabfallquelle vorhanden ist, deren Luftanteil niedriger ist, als der höchste Luftanteil der anderen Gruppe. Mit anderen Worten gibt es einen Grenzwert des durchschnittlichen Luftanteils dergestalt, daß die Flüssigabfallquellen der ersten Gruppe oberhalb und die Flüssigkeitsabfallquellen der zweiten Gruppe unterhalb des Grenzwertes liegen.

Hingegen ist die Bezeichnung "relativ niedriger Luftanteil" nicht dahingehend zu verstehen, daß der Volumenstrom an Luft niedriger als der Volumenstrom an Wasser ist. Konstruktion und Betriebsweise üblicher LH-Stationen und insbesondere üblicher Waschstationen bringen es mit sich, daß selbst bei einer Flüssigabfallquelle mit "relativ niedrigem" Luftanteil während des größeren Teils der Betriebszeit nur oder überwiegend Luft von der Flüssigabfallquelle abgesaugt wird. Im Rahmen der praktischen Erprobung der Erfindung wurden beispielsweise selbst Flüssigabfallquellen mit einer durchschnittlichen Luftförderung von mehr als 80% (beispielsweise durchschnittlich 5 Sekunden Flüssigkeitsförderung pro Minute) der Gruppe mit einer "relativ niedrigen" Luftförderung zugeordnet.

Ein in Relation zu dem Volumenstrom an Wasser hoher Volumenstrom an Luft resultiert vor allem bei solchen Analysegeräten, bei denen der Flüssigabfall mehrerer Abfallquellen mit einer gemeinsamen kontinuierlich angetriebenen Pumpe abgesaugt wird. Durch die Verwendung einer gemeinsamen Pumpe wird im Vergleich zu getrennten, den Flüssigabfallquellen zugeordneten und individuell gesteuerten Absaugpumpen eine wesentliche Einsparung an Kosten, Bauvolumen und Gewicht erzielt. Andererseits bestehen aber gerade bei solchen Konstruktionen besondere Probleme hinsichtlich der Schaumbildung.

Wenn vier oder mehr Flüssigabfallquellen vorhanden sind, besteht grundsätzlich die Möglichkeit, mehr als zwei Hauptstränge bis zu dem Abfallsammelbehälter zu führen. Gemäß der praktischen Erprobung der Erfindung ist dies im Regelfall jedoch nicht notwendig. Es genügt wenn zwei getrennte Flüssigabfall-Leitungen, die sich in der beschriebenen Weise hinsichtlich des geförderten Luftanteils unterscheiden, getrennt in den Abfallbehälter münden.

Die Erfindung wird nachfolgend anhand eines in den Figuren dargestellten Ausführungsbeispiels näher erläutert. Die darin dargestellten Merkmale und Besonderheiten können einzeln oder in Kombination verwendet werden, um bevorzugte Ausgestaltungen der Erfindung zu schaffen; es zeigen:
- Fig. 1: eine schematische Aufsicht auf ein Analysegerät,
- Fig. 2: ein Leitungsdiagramm des für die vorliegende Erfindung wesentlichen Teils des Analysegerätes,
- Fig. 3: eine Seitenansicht teilweise im Schnitt der für den Abschnitt des Abfalleitungssystems zwischen einer Leitungszusammenführung und dem Abfallsammelbehälter verwendeten Bauteile.

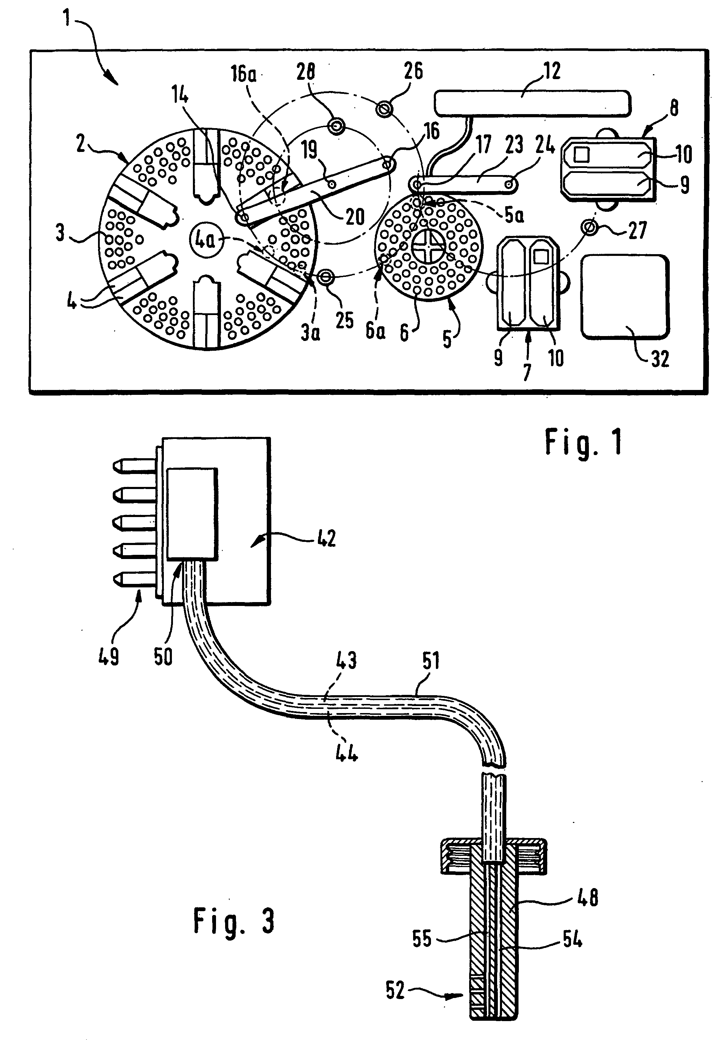

Figur 1 zeigt schematisch die wesentlichen Bearbeitungsstationen eines für immunchemische Analysen mit ECL (Elektrochemolumineszens)-Detektion geeigneten Analysegeräts. Hierzu gehören ein Proben-Reagenzrotor mit Probengefäßen 3 und Reagenzgefäßen 4, ein Inkubationsrotor 5 mit in mehreren Reihen angeordneten Reaktionsgefäßen 6, zwei Stationen 7 und 8 mit Hilfsflüssigkeiten für die Bead-Bearbeitung (nämlich eine Spülflüssigkeit in Spülflüssigkeitsbehältern 9 als Transport-, Reinigungs- und Reaktionsmedium für die Beads sowie zum Konditionieren der ECL-Meßzelle vor der Messung und eine Reinigungsflüssigkeit in Reinigungsbehältern 10 zum Reinigen der ECL-Meßzelle nach der Messung).

Zur Durchführung von Analysen an in den Probengefäßen 3 enthaltenen Proben werden Probenflüssigkeit und Reagenzien (einschließlich Beads) aus den Gefäßen 3 und 4 an Bearbeitungsstationen 3a bzw. 4a des Proben-Reagenzrotors 2 entnommen, in an Bearbeitungsstationen 6a des Inkubationsrotors 5 lokalisierte Reaktionsgefäße 6 transferiert und dort miteinander gemischt. Nach Beendigung der Reaktion wird das resultierende Reaktionsgemisch aus den in einer Bearbeitungsstation 5a lokalisierten Reaktionsgefäßen 6 in eine Meßkammer 12 abgesaugt, in der eine für die Analyse charakteristische Meßgröße (nämlich ein ECL-Signal) gemessen wird.

Zur Durchführung dieser Reaktionsschritte weist das Analysegerät 1 Bearbeitungswerkzeuge auf, zu denen im dargestellten Fall eine Dosiernadel 14, ein Rührer 16 und eine Absaugnadel 17 gehören. Die Bearbeitungswerkzeuge sind an Schwenkarmen 20,23 jeweils in vertikaler Richtung und in horizontaler Richtung (um eine Schwenkachse 19 bzw. 24 herum) beweglich. Die Nadeln 14 und 17 und der Rührer 16 erstrecken sich von den Schwenkarmen 20,21 vertikal nach unten und sind deshalb in Figur 1 nur als Punkte zu erkennen. Bei dem dargestellten Gerät wird der Rührer 16 verwendet, um Reagenzflüssigkeiten, die sich in einem Reagenzgefäß 4 an einer Bearbeitungsstation 16a auf dem Proben-Reagenzrotor 2 befinden und Beads enthalten, zu homogenisieren.

Zur Reinigung der Bearbeitungswerkzeuge sind entsprechende Waschstationen vorgesehen, nämlich zwei Dosiernadel-Waschstationen 25 und 26, eine Absaugnadel-Waschstation 27 und eine Rührer-Waschstation 28.

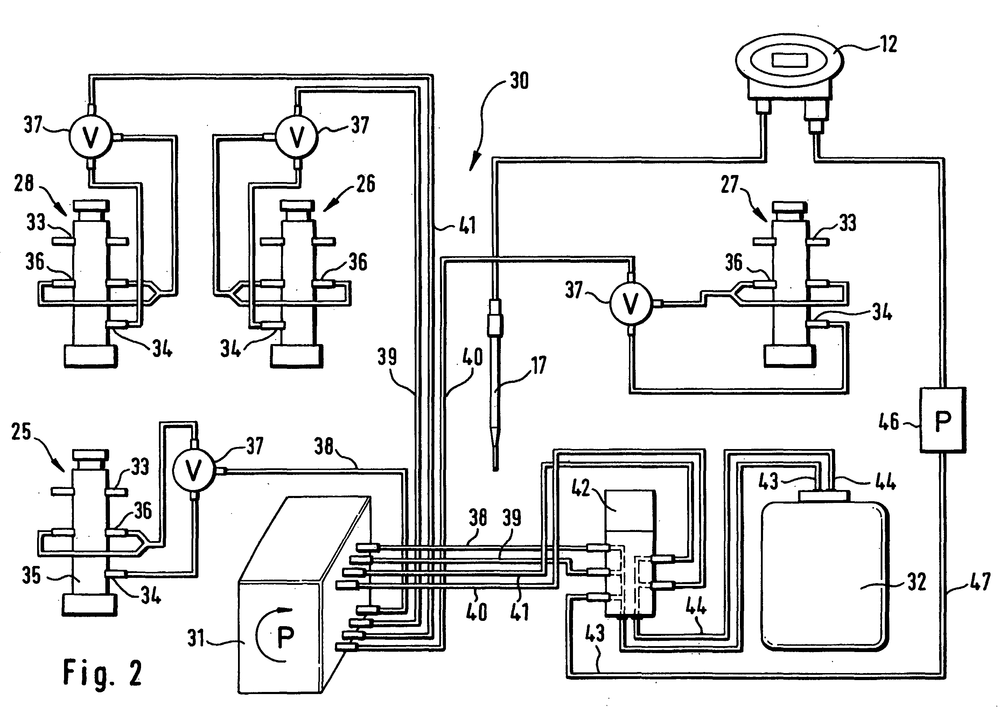

Einzelheiten der Funktion des Analysegeräts sind für die vorliegende Erfindung nicht bedeutsam und können einschlägigen Publikationen entnommen werden. Wesentlich im Hinblick auf die Erfindung ist nur, daß das Analysegerät 1 mehrere LH-Stationen aufweist, an denen flüssiger Abfall anfällt und die somit Flüssigabfallquellen bilden. Im dargestellten Fall sind dies vor allem die Waschstationen 25 bis 28. Deren Flüssigabfall wird über ein in Figur 2 dargestelltes, insgesamt mit 30 bezeichnetes Flüssigabfall-Leitungssystem 30 und eine Pumpe 31 in einen Abfallbehälter 32 abgesaugt. Eine weitere, ebenfalls an das Leitungssystem 30 angeschlossene Flüssigabfallquelle ist die Meßkammer 12.

Die Waschstationen 25 bis 28 weisen jeweils zwei Absaugstellen auf, nämlich eine erste Absaugstelle 34, die am Grunde des jeweiligen Waschflüssigkeitsgefäßes 35 angeordnet ist und eine zweite Absaugstelle 36 zum Absaugen von Waschflüssigkeit an einem Überlauf des Waschflüssigkeitsgefäßes 35. Bei der dargestellten Ausführungsform ist die zweite Absaugstelle 36 mittels mehrerer in gleicher Höhe in das Waschflüssigkeitsgefäß mündender Absauganschlüsse realisiert. Nähere Informationen über die Konstruktion und Funktion solcher Waschstationen sind der WO 97/35173 zu entnehmen.

Die Absaugstellen 34,36 sind jeweils mittels eines Umschaltventils 37 alternierend mit einem für die Absaugstellen 34,36 gemeinsamen, jedoch für die unterschiedlichen Waschstationen 25 bis 28 getrennten Leitungsabschnitt (Nebenstrang) 38 bis 41 verbindbar, der von den Waschstationen über die Pumpe 31 zu einer Leitungszusammenführung 42 führt.

Die Pumpe 31 ist mehrkanalig ausgebildet, d.h. sie kann mittels eines gemeinsamen Antriebs Flüssigkeit in mehreren getrennten Leitungen pumpen. Bei der dargestellten bevorzugten Ausführungsform liegt sie in den Nebensträngen 38 bis 41. Sie kann jedoch auch an anderer Stelle in dem Flüssigabfall-Leitungssystem 30 angeordnet sein. Generell ist eine mehrkanalige Pumpe, durch die Flüssigabfall in mehreren Leitungen mittels eines gemeinsamen Antriebs gepumpt wird, bevorzugt. Geeignet ist insbesondere eine Mehrkanalschlauchpumpe.

Wenn die Pumpe 31 in Betrieb ist, saugt sie den Flüssigabfall gleichzeitig an sämtlichen angeschlossenen Flüssigabfallquellen (im dargestellten Fall also an allen Waschstationen 25 bis 28) ab. Die dort anfallenden Flüssigkeitsmengen sind jedoch verschieden. Die Dosiernadel-Waschstationen 25 und 26 erzeugen einen Flüssigabfall mit relativ hohem Flüssigkeitsanteil, weil während des Analysevorgangs die Dosiernadeln häufig zum Transfer verschiedener Flüssigkeiten verwendet werden und demzufolge bei jeder Analyse mehrfach gereinigt werden müssen. Bei jedem Reinigungsvorgang wird über Waschflüssigkeitsanschlüsse 33 Waschflüssigkeit in die Waschstationen gepumpt, um die Außenseite der Dosiernadeln zu reinigen. Weitere flüssige Abfallbestandteile entstehen durch das Spülen der Innenwände der Dosiernadel. Diese flüssigen Abfallbestandteile werden je nach Stellung der Umschaltventile 37 über die Absaugstellen 34 oder 36 abgesaugt. Vor allem wenn die Umschaltventile 37 so eingestellt sind, daß die Pumpe 31 mit den Absaugstellen 36 am Überlauf des Waschflüssigkeitsgefäßes 35 verbunden ist, wird überwiegend Luft abgesaugt.

Die Absaugnadel-Waschstation 27 und die Rührer-Waschstation 28 sind weniger häufig im Einsatz, weil für eine Analyse nur einmal die fertige Reaktionsflüssigkeit abgesaugt werden muß und die Reinigung des Rührers je nach Testablauf nur in großen zeitlichen Abständen notwendig ist. Demzufolge befinden sich die Waschstationen 27 und 28 nur während eines sehr kleinen Anteils der Betriebszeit der Pumpe 31 in einem Zustand, bei dem im wesentlichen Flüssigkeit abgesaugt wird. Während des bei weitem größten Teils der Betriebszeit saugt die Pumpe 31 von diesen Flüssigabfallquellen nur Luft ab.

An der Zusammenführung 42 wird der Flüssigabfall der Waschstationen derartig zusammengefaßt, daß der Flüssigabfall von den Flüssigabfallquellen mit einem höheren Luftanteil, nämlich von der Absaugnadel-Waschstation 27 und der Rührer-Waschstation 28 über einen ersten Hauptstrang 44 in den Abfallbehälter 32 strömt und der Flüssigabfall von den Flüssigabfallquellen mit einem niedrigeren Luftanteil, nämlich den Dosiernadel-Waschstationen 25 und 26, über einen zweiten, von dem ersten Hauptstrang 44 getrennten Hauptstrang 43 in den Abfallbehälter 32 geleitet wird. Dementsprechend sind die Nebenstränge 38 und 39 an den Hauptstrang 43 und die Nebenstränge 40 und 41 an den Hauptstrang 44 angeschlossen. Insgesamt ist das Flüssigabfall-Leitungssystem 30 also so gestaltet, daß von den vier Flüssigabfall-Leitungen, die von den Waschstationen 25 bis 28 zu dem Abfallbehälter 32 führen, je zwei paarweise vollständig getrennt verlaufen, nämlich einerseits die aus den Nebensträngen 38 und 39 und dem Hauptstrang 43 bestehenden Flüssigabfall-Leitungen der Waschstationen 25,26 mit geringerem Luftanteil und andererseits die aus den Nebensträngen 40,41 und dem Hauptstrang 44 bestehenden Flüssigabfall-Leitungen der Waschstationen 27, 28 mit dem höheren Luftanteil.

Eine weitere Flüssigabfallquelle wird durch die Meßzelle 12 gebildet. Meßflüssigkeit, die mittels einer Meßflüssigkeitspumpe 46 aus der Meßzelle 12 gepumpt wird, strömt über einen weiteren Nebenstrang 47 zu der Leitungszusammenführung 42 und von dort in den Abfallbehälter 32. Da dieser Flüssigabfall nahezu vollständig aus Flüssigkeit besteht, ist der Nebenstrang 47 an den Hauptstrang 43 angeschlossen, der den Flüssigabfall mit dem geringeren Luftanteil transportiert.

Figur 3 zeigt eine bevorzugte konstruktive Ausgestaltung der Leitungszusammenführung 42, des anschließenden Leitungsabschnitts mit den Hauptsträngen 43 und 44 sowie eines Anschlußstücks 48 zum Anschließen an den Abfallbehälter 32.

Die Leitungszusammenführung 42 wird zweckmäßig von einem einzigen Bauteil gebildet, das eine Anzahl von Einlaß-Anschlüssen 49 hat, die der Anzahl der Nebenstränge 38 bis 41, 47 entspricht. Die Anzahl der Auslaß-Anschlüsse 50 entspricht der Anzahl der Hauptstränge 43,44 die zu dem Anschlußstück 48 und somit zu dem Behälter 32 führen. Statt der dargestellten einstückigen Ausbildung können für die Leitungszusammenführung 42 auch andere Konstruktionen, beispielsweise bestehend aus einer Mehrzahl üblicher Schlauchverbindungselemente (Y-Stücke, T-Stücke) verwendet werden.

Die Hauptstränge 43,44 des Leitungssystems 30 sind bevorzugt in einem Mehrkammerschlauch 51 zusammengefaßt, der zusätzlich zu den Kammern für die Hauptstränge 43 und 44 mindestens eine nicht dargestellte weitere Kammer enthalten kann, die elektrische Leitungen, insbesondere für die Detektion des Flüssigkeits-Höhenstands in dem Abfallbehälter 32 enthält.

Am unteren Ende des dargestellten Anschlußstücks 48 ist ein Sensor 52 mit Bohrungen für die Höhenstandsdetektion vorgesehen. Im Hinblick auf eine geringe Schaumbildung hat es sich als vorteilhaft erwiesen, wenn die Hauptstränge 43 und 44 im wesentlichen parallel und im engen räumlichen Abstand (bevorzugt maximal 1 cm) in den Abfallbehälter 32 münden. Entsprechend enthält das Anschlußstück 48 zwei eng benachbarte parallel verlaufende Bohrungen 54 und 55, die den letzten Abschnitt der Hauptstränge 43,44 bilden.

## Patentansprüche

1. Analysegerät zur Analyse von Proben, insbesondere von Körperflüssigkeiten, auf darin enthaltene Bestandteile mit einer Mehrzahl von Liquid-Handling(LH)-Stationen, die Bearbeitungsstationen (3a,4a,5a,6a,16a) einschließen, an denen mittels Bearbeitungswerkzeugen, wie beispielsweise einer Dosiernadel (14) oder einem Rührer (16), Bearbeitungsschritte an in Behältern (3,4,6,9,10,12) enthaltenen Flüssigkeiten durchgeführt werden,
bei welchem
an mindestens einem Teil der LH-Stationen flüssiger Abfall anfällt, so daß sie Flüssigabfallquellen (12,25-28) bilden **dadurch gekennzeichnet, daß** der flüssige Abfall mittels mindestens einer Pumpe (31) von den Flüssigabfallquellen mit unterschiedlichen Anteilen an Luft über ein Flüssigabfall-Leitungssystem (30) in einen Abfallbehälter (32) abgesaugt wird,
das Flüssigabfall-Leitungssystem (30) mindestens zwei getrennt in den Abfallbehälter mündende Leitungen (43;44) aufweist, und
an mindestens eine der getrennt in den Abfallbehälter (32) mündenden Leitungen (43;44) eine Mehrzahl von Flüssigabfallquellen (25-28) angeschlossen sind, von denen jeweils separate Leitungen als Nebenstränge (38,39;40,41) zu einer Leitungszusammenführung (42) führen, von der aus eine gemeinsame Leitung als Hauptstrang (43;44) zu dem Abfallbehälter (32) führt und in diesen mündet,
wobei die Nebenstränge (38,39;40,41) derartig zusammengeführt sind, daß in einer der mindestens zwei in den Abfallbehälter (32) mündenden Leitungen Flüssigabfall mit einem höheren Luftanteil und in einer zweiten der mindestens zwei in den Abfallbehälter mündenden Leitungen Flüssigabfall mit einem niedrigeren Luftanteil transportiert wird.

2. Analysegerät nach Anspruch 1, bei welchem der Flüssigabfall mehrerer Flüssigabfallquellen mit einer gemeinsamen kontinuierlich angetriebenen Pumpe (31) abgesaugt wird.

3. Analysegerät nach Anspruch 2, bei welchem der Flüssigabfall mittels einer mehrkanaligen Pumpe (31) in mehreren getrennten Leitungen (38 bis 41) mittels eines gemeinsamen Antriebs gepumpt wird.

4. Analysegerät nach Anspruch 3, bei welchem die Pumpe (31) in den Nebensträngen (38-41) vor der Leitungszusammenführung (42) liegt.

5. Analysegerät nach einem der vorhergehenden Ansprüche, bei welchem mindestens eine der Flüssigabfallquellen eine Waschstation (25-28) ist, an der ein Bearbeitungswerkzeug mittels einer Waschflüssigkeit gereinigt wird.

6. Analysegerät nach Anspruch 5, bei welchem die Mehrzahl von Flüssigabfallquellen, die über Nebenstränge (39-41) und eine Leitungszusammenführung (42) an einen Hauptstrang (z.B. 43) angeschlossen sind, mindestens zwei Waschstationen (25,26) einschließt.

7. Analysegerät nach einem der vorhergehenden Ansprüche, bei welchem mindestens eine Waschstation (25-28) ein Waschflüssigkeitsgefäß (35) mit einer ersten Absaugstelle (34) am Grunde des Waschflüssigkeitsgefäßes (35) und einer zweiten Absaugstelle (36) an einem Überlauf des Waschflüssigkeitsgefäßes (35) aufweist.

8. Analysegerät nach Anspruch 7, bei welchem die Absaugstellen (34,36) mittels eines Umschaltventils (37) alternierend mit einem der Nebenstränge (38-41) verbindbar sind.

9. Analysegerät nach einem der vorhergehenden Ansprüche, bei welchem die getrennt in den Abfallbehälter (32) mündenden Leitungen (43,44) in engem räumlichem Abstand in den Abfallbehälter (32) münden.

## Claims

1. Analysis device for analyzing samples, in particular of body liquids, with respect to components contained therein, with a plurality of liquid handling (LH) stations, which include processing stations (3a, 4a, 5a, 6a, 16a), at which processing steps are performed to liquids contained in containers (3, 4, 6, 9, 10, 12), by means of processing tools, as e.g. a dosing needle (14) or a stirrer (16),
wherein
at least at a part of the LH stations liquid waste is produced, whereby said LH stations form liquid waste sources (12, 25-28), **characterized in that** the liquid waste is evacuated, with at least one pump (31), from the liquid waste sources, with different proportions of air, via a liquid waste conducting system (30), into a liquid waste container (32),
the liquid waste conducting system (30) comprises at least two separate lines (43, 44) leading into the liquid waste container, and
a plurality of liquid waste sources (25 - 28) is connected to at least one of said separate lines (43; 44) leading into the liquid waste container (32), via separate lines leading as secondary lines (38, 39; 40, 41) from the respective liquid waste sources to a line junction (42), and via a common line leading as primary line (43; 44) from the line junction (42) to the liquid waste container (32), whereas the secondary lines (38,39;40,41) are grouped together in such a way that in one of the at least two lines leading into the liquid waste container (32), liquid waste with a higher proportion of air is transported and in a second of the at least two lines leading into the liquid waste container, liquid waste with a lower proportion of air is transported.

2. Analysis device according to claim 1, wherein the liquid waste of a plurality of liquid waste sources is evacuated by means of a common, continuously driven pump (31).

3. Analysis device according to claim 2, wherein the liquid waste is pumped in a plurality of separate lines (38 - 41) by means of a multichannel pump (31) driven by a common drive.

4. Analysis device according to claim 3, wherein the pump (31) is located in the secondary lines (38 - 41) upstream from the line junction (42).

5. Analysis device according to any one of the preceding claims, wherein at least one of the liquid waste sources is a washing station (25-28), for cleaning a processing tool by means of a washing liquid.

6. Analysis device according to claim 5, wherein the plurality of liquid waste sources connected to a primary line (e.g. 43) via secondary lines (39 - 41) and a line junction (42), include at least two washing stations (25, 26).

7. Analysis device according to any one of the preceding claims, wherein at least one washing station (25 - 28) comprises a washing liquid container (35) with a first evacuation point (34) at the bottom of the washing liquid container (35) and a second evacuation point (36) at an overflow of the washing liquid container (35).

8. Analysis device according to claim 7, wherein the evacuation points (34, 36) can be connected alternately to one of the secondary lines (38 - 41) by means of a switch valve (37).

9. Analysis device according to any one of the preceding claims, wherein the separate lines (43, 44) leading into the liquid waste container (32) are arranged to lead in close proximity into the liquid waste container (32).

## Revendications

1. Appareil d'analyse pour analyser des échantillons, en particulier des liquides du corps afin d'en déterminer les constituants, avec une pluralité de stations Liquid-Handling (LH) intégrant des stations de traitement (3a, 4a, 5a, 6a, 16a) sur lesquelles sont effectuées au moyen d'outils de traitement, comme par exemple une aiguille de dosage (14) ou un agitateur (16), des opérations de traitement sur des liquides contenus dans des récipients (3, 4, 6, 9, 10, 12),
dans lequel
des déchets liquides se produisent sur au moins une partie des stations LH qui constituent ainsi des sources de déchets liquides (12, 25-28),
**caractérisé en ce que**
les déchets liquides sont aspirés au moyen d'au moins une pompe (31) sur les sources de déchets liquides à teneurs en air différentes et transportés par l'intermédiaire d'un système de conduites pour déchets liquides (30) dans un récipient à déchets (32),
le système de conduites pour déchets liquides (30) comprend au moins deux conduites (43 ; 44) débouchant séparément dans le récipient à déchets, et
au moins une des conduites (43 ; 44) débouchant séparément dans le récipient à déchets (32) est raccordée à une pluralité de sources de déchets liquides (25-28) d'où des conduites à chaque fois séparées mènent en tant que lignes secondaires (38, 39 ; 40, 41) à un regroupement de conduites (42) à partir duquel une conduite commune mène en tant que ligne principale (43 ; 44) au récipient à déchets (32) et débouche dans celui-ci,
les lignes secondaires (38, 39 ; 40, 41) étant regroupées de manière à transporter dans une desdites au moins deux conduites débouchant dans le récipient à déchets (32), des déchets liquides avec une teneur en air plus élevée et dans une deuxième desdites au moins deux conduites débouchant dans le récipient à déchets, des déchets liquides avec une teneur en air moins élevée.

2. Appareil d'analyse selon la revendication 1, dans lequel les déchets liquides de plusieurs sources de déchets liquides sont aspirés avec une pompe (31) commune à entraînement continu.

3. Appareil d'analyse selon la revendication 2, dans lequel les déchets liquides sont pompés au moyen d'une pompe (31) à canaux multiples dans plusieurs conduites (38 à 41) séparées, au moyen d'un entraînement commun.

4. Appareil d'analyse selon la revendication 3, dans lequel la pompe (31) est située dans les lignes secondaires (38-41) en amont du regroupement de conduites (42).

5. Appareil d'analyse selon l'une des revendications précédentes, dans lequel au moins l'une des sources de déchets liquides est une station de lavage (25-28) dans laquelle un outil de traitement est nettoyé au moyen d'un liquide de lavage.

6. Appareil d'analyse selon la revendication 5, dans lequel la pluralité de sources de déchets liquides raccordées par des lignes secondaires (39-41) et un regroupement de conduites (42) à au moins une ligne principale (p.ex. 43) intègre au moins deux stations de lavage (25, 26).

7. Appareil d'analyse selon l'une des revendications précédentes, dans lequel au moins une station de lavage (25-28) comporte un récipient de liquide de lavage (35) avec un premier point d'aspiration (34) au niveau du fond du récipient de liquide de lavage (35) et un deuxième point d'aspiration (36) au niveau d'une surverse du récipient de liquide de lavage (35).

8. Appareil d'analyse selon la revendication 7, dans lequel les points d'aspiration (34, 36) peuvent être reliés au moyen d'une vanne d'inversion (37), de manière alternante, à l'une des lignes secondaires (38-41).

9. Appareil d'analyse selon l'une des revendications précédentes, dans lequel les conduites (43, 44) débouchant séparément dans le récipient à déchets (32) débouchent en espacement serré dans le récipient à déchets (32).
